# EUROPEAN PATENT SPECIFICATION

(11) **EP 2 259 562 B1**
(45) Date of publication and mention of the grant of the patent: **26.02.2014**
(21) Application number: 10175851.4
(22) Date of filing: 16.05.2002
(51) Int. Cl.: H04M 1/725, H04M 1/02

(54) **Mobile communication terminal**
Mobiles Kommunikationsendgerät
Terminal de communication mobile

(30) Priority: 21.06.2001 KR 20010035334
(43) Date of publication of application: 08.12.2010
(62) Divisional of application: 07022795.4
(73) Proprietor: LG Electronics Inc., Youngdungpo-Ku Seoul (KR)
(72) Inventor: Jeon, Byung-Su, Daegu (KR)
(74) Representative: Ter Meer Steinmeister & Partner

(56) References cited:
- EP-A- 1 004 957
- EP-A- 1 033 644
- EP-A1- 0 961 461
- EP-A2- 0 898 405
- US-A- 5 414 444

## Description

### BACKGROUND OF THE INVENTION

### 1. Field of the Invention

The present invention relates to a folder type mobile communication terminal and its operating method, and more particularly, to a folder type mobile communication terminal that is capable of improving utilization of an auxiliary display unit, and its control method.

### 2. Description of the Background Art

In general, according to its form, a mobile communication terminal is classified into a bar type mobile communication terminal of which a keypad is exposed, a flip type mobile communication terminal of which a cover is formed at a keypad, and a folder type mobile communication terminal of which a main body and a cover body are folded.

Especially, referring to the folder type mobile communication terminal, as it is folded, its size becomes small and its weight is light, so that it is convenient to be carried and as such it is widely used.

However, in the conventional folder type mobile communication terminal, its display unit is installed at the main body of the mobile communication terminal or at the inner surface of the folder. Thus, once the folder type mobile communication is folded, the display unit is covered to be placed at the inner Therefore, in a state that the folder type mobile communication terminal is folded, the display unit is hardly checked, causing a problem that it is not possible to check a charged state of a battery, time or whether a message has reached.

In order to solve the problem, an auxiliary display unit is additionally installed at an outer surface of the folder of the folder type mobile communication terminal, so that mobile communication terminal information can be used even when the folder type mobile communication terminal is closed.

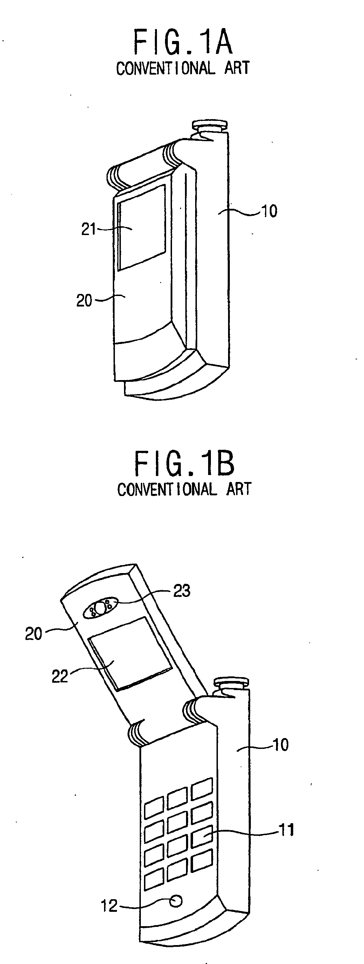

Figures 1A and 1B are drawings illustrating the folder type mobile communication terminal including an auxiliary display unit.

As shown in Figures 1A and 1B, in a folder type mobile communication terminal having a main body 10 and a folder 20 hinged at the main body 10 and rotatably operated centering around a rotational shaft, an auxiliary display unit 21 is formed at an outer surface of the folder 20 and a main display unit 22 is formed at an inner surface of the folder 20.

A keypad 11 consisting of a number key, a power key and a function key and a microphone 12 are formed at the inner surface of the main body 10. A content inputted through the keypad 11 is displayed on the main display unit 22.

A speaker 23 is formed at the inner surface of the folder 20.

When the folder 20 is opened and a power is applied, a state of the mobile communication terminal such as a remaining battery capacity and an electric field strength is displayed on the main display unit 22, and a call time, whether a message has received and an inputted character or number are displayed. Also, the entire information of the mobile communication terminal such as a date or time is displayed.

That is, when the folder 20 is closed, power is cut off and no information is displayed on the main display unit 22, while when the folder 20 is opened, power is applied and information is displayed.

Even when the folder type mobile communication terminal is in a destination standby state that the folder 20 is closed, the electric field strength of the mobile communication terminal, a message receiving state, a remaining battery capacity or time can be checked through the auxiliary display unit 21 attached at the outer surface of the folder 20.

Since the auxiliary display unit 21 is positioned at an outer surface of the folder 20, the conventional folder mobile communication terminal is convenient to use in that it can check the state of the mobile communication state even when the folder 20 is in a closed state. However, only the main display unit 22 is used when an operation such as transmission of a short message or using of a wireless Internet is to be performed by opening the folder 20.

In other words, in the conventional folder type mobile communication terminal, since the main display unit and the auxiliary display unit are attached at the opposite surface of the folder, the auxiliary display unit and the main display unit can not be used simultaneously, thus degrading its utilization.

In addition, in the conventional folder type mobile communication terminal, since the main display unit and the auxiliary display unit are respectively attached at the inner surface and the outer surface of the folder, its thickness becomes thick, so that it is difficult to make a compact size.

The above references are incorporated by reference herein where appropriate for appropriate teachings of additional or alternative details, features and/or technical background.

EP 0 961 461 A1 describes a communication terminal comprising a rotary operation key. Said operation key can be rotated, pushed and slid, wherein the movement direction or the movement amount of a cursor can be changed, when the operation key is slid, so that the cursor can reach and select an item displayed on display unit.

EP 0 898 405 A2 describes an information communication terminal device. The device comprises an upper case and a lower case that are rotatable connected in a connection part. The connection part comprises a video camera and a camera lens. Further, a display/operation part is provided in the upper case and a display/operation part is provided in the lower case. The display/operation parts can be operated in a recording mode, a transmission/reception mode and an information acquisition mode. In the information acquisition mode contents displayed on one display part can be selected, wherein the selector information content is then displayed in the other display part.

EP 1 004 957 A describes a portable terminal comprising a LCD display screen, a rotatable main soft key located below the LCD display screen, and first and second auxiliary soft keys located on the two sides of the main soft key, which auxiliary soft keys can be pressed.

US 5,414,444 A describes a personal communicator including a wireless communication LCD and a multimedia LCD. The communication LCD is mounted on a hinged member and is superimposed on top of the multimedia LCD. The communication LCD is sufficiently transparent to permit viewing of the underlying multimedia LCD. The communicator further includes a steerable wheel imager for controlling an image field coverage and adjusting to the rotation of the user relative to the personal communicator.

EP 1 033 644 A describes a two-way mobile communication device having a display screen that displays an image map. The image map contains a plurality of graphical symbols each identifying resident applications, which can be launched. Keys or buttons of the two-way mobile communication device are used to activate or launch these resident applications.

### SUMMARY OF THE INVENTION

Therefore, an object of the present invention is to provide a folder type mobile communication terminal and its controlling method that can facilitate chatting with a plurality of users.

This object is solved by the features of the independent claims.

A folder type mobile communication terminal preferably includes: a main body having a display unit; and a folder rotatably combined at the main body and having an opening unit allowing the display unit to be shown. To achieve at least these advantages in whole or in parts, there is further provided a folder type mobile communication terminal including: a main body having an auxiliary display unit; and a folder having a main display unit and an opening unit allowing the auxiliary display unit to be shown.

To achieve at least these advantages in whole or in parts, there is further provided a folder type mobile communication terminal including: a main body having an auxiliary display unit; a folder having a main display unit and an opening unit formed at a position facing the auxiliary display unit; and a wheel button formed at one side of the main body to input an operation command to the auxiliary display unit.

To achieve at least these advantages in whole or in parts, there is further provided an operating method of a folder type mobile communication terminal preferably including the steps of: connecting to the Internet through a folder type mobile communication terminal; displaying titles for Internet pages opened for searching the Internet; and displaying a conversation content inputted in chatting.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figures 1A and 1B are drawings illustrating the structure of a folder type mobile communication terminal in accordance with a conventional art;
Figures 2A and 2B, Figures 3A and 3B, Figures 4A and 4B, Figures 5A and 5B and Figures 6A and 6B are drawings illustrating each embodiment of a folder type mobile communication terminal in accordance with the present invention;
Figure 7 is a detailed block diagram showing the construction of the older type mobile communication terminal in accordance with the present invention;
Figure 8 is a flow chart of an operating method of the folder type mobile communication terminal in accordance with the present invention;
Figures 9, 10 and 11 are drawings illustrating an Internet searching method using the folder type mobile communication terminal; and
Figures 12, 13 and 14 are drawings illustrating a chatting method using the folder type mobile communication terminal in accordance with the present invention.

### DETAILED DESCRIPTION OF THE PREFERRED EMBODIMENTS

A folder type mobile communication terminal and its controlling method in accordance with the present invention will now be described with reference to the accompanying drawings.

The folder type mobile communication terminal of the present invention is constructed that an auxiliary display unit is formed at a certain position of a main body and an opening unit is formed at a folder portion facing the auxiliary display unit so that the auxiliary display unit can be checked from outside when the folder is both in an opened and in a closed state.

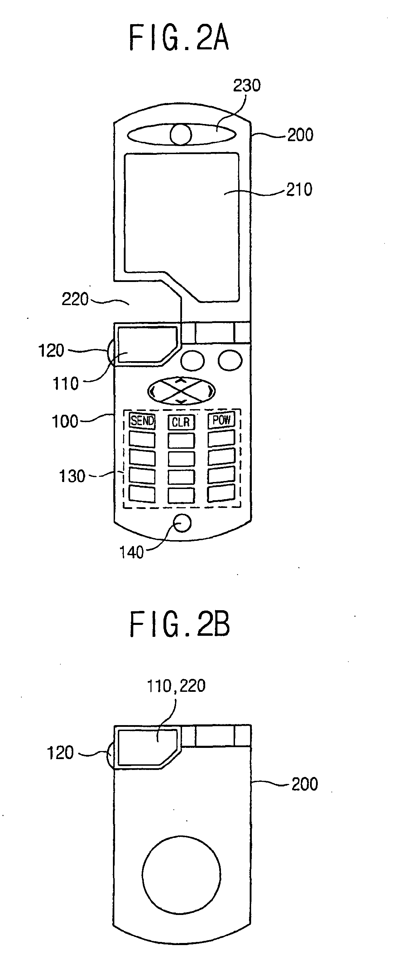

Figures 2A and 2B, Figures 3A and 3B, Figures 4A and 4B, Figures 5A and 5B and Figures 6A and 6B are drawings illustrating each embodiment of a folder type mobile communication terminal in accordance with the present invention.

As shown in Figures 2A and 2B, a folder type mobile communication terminal in accordance with a first embodiment of the present invention includes: a main body 100; an auxiliary display unit 110 formed at a left upper end of the inner surface of the main body; a folder 200 hinged at the main body 100 and having an opening unit 220 to view the auxiliary display unit 110 no matter whether the folder 200 is opened or closed; and a main display unit 210 formed at an inner surface of the folder 200.

A wheel button 120 is additionally installed at left side or right side of the main body 100 to utilize the auxiliary display unit 110.

A keypad 130 including a number key, a power key and a function key is installed at a lower side of the auxiliary display unit 110 at the inner surface of the main body 100. A microphone 140 is formed at the lowermost side. The folder 200 includes a speaker 230 and the main display unit 210 for displaying information for the user.

The auxiliary display unit 110 improves utilization by displaying the current state such as an electric field strength, whether a message has received, and time when the mobile communication terminal in a destination standby state and by assisting the main display unit 210 when the mobile communication is in use.

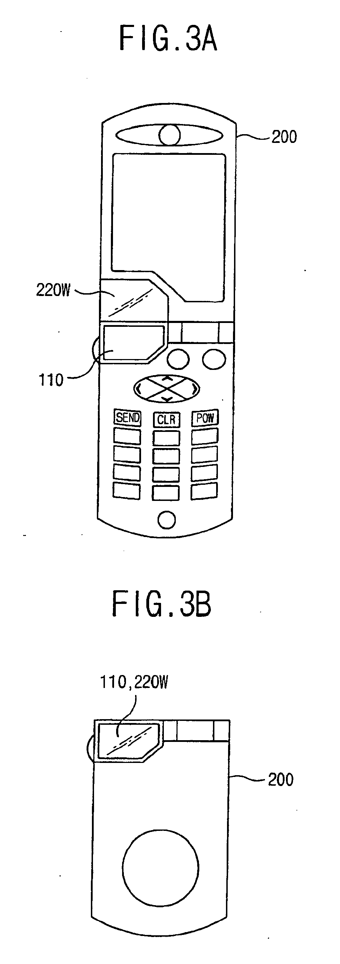

Figures 3A and 3B are drawings illustrating that a transparent window 220W is additionally formed at the opening unit 220 of the folder 200 to protect the auxiliary display unit 110 and view the auxiliary display unit 110 even when the folder 200 is in a closed state.

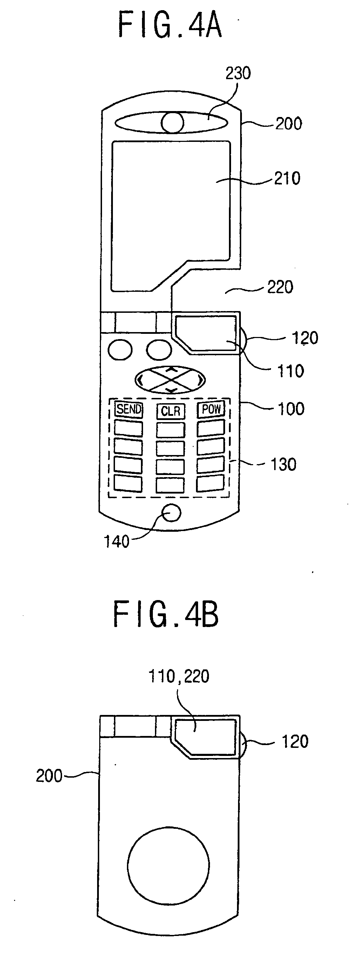

As shown in Figures 4A and 4B, a folder type mobile communication terminal in accordance with a second embodiment of the present invention includes: a main body 100; an auxiliary display unit 110 formed at a right upper end of the inner surface of the main body; a folder 200 hinged at the main body 100 and having an opening unit 220 to view the auxiliary display unit 110 no matter whether the folder 200 is opened or closed; and a main display unit 210 formed at an inner surface of the folder 200.

A wheel button 120 for utilizing the auxiliary display unit is additionally installed, and a transparent window 220W is also additionally formed at the opening unit 220 to protect the auxiliary display unit 110 and view the auxiliary display unit 110 even when the folder 200 is in a closed state.

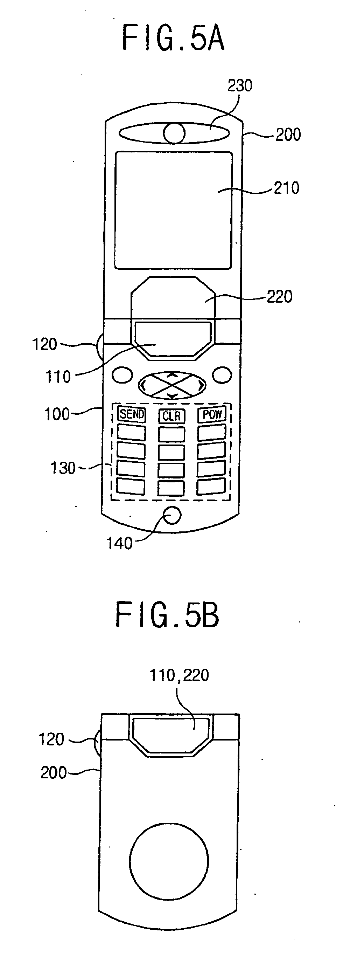

Figures 5A and 5B are drawings illustrating a third embodiment of a folder type mobile communication terminal in accordance with the present invention.

As shown in Figures 5A and 5B, a folder type mobile communication terminal in accordance with a third embodiment of the present invention includes: a main body 100; an auxiliary display unit 110 formed at a middle upper end of the inner surface of the main body; a folder 200 hinged at the main body 100 and having an opening unit 220 to view the auxiliary display unit 110 no matter whether the folder 200 is opened or closed; and a main display unit 210 formed at an inner surface of the folder 200.

A wheel button 120 is additionally formed at the main body 100 to utilize the auxiliary display unit 110.

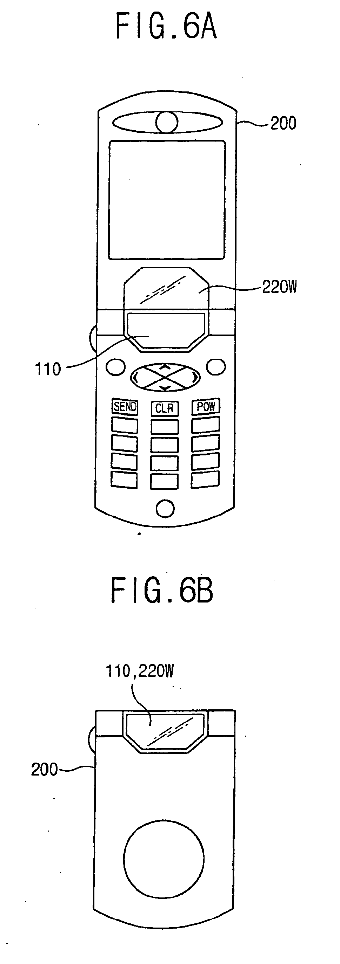

Figure 6 is drawing illustrating that a transparent window 220W is additionally formed at the opening unit 220 of the folder 200 to assist the auxiliary display unit 110.

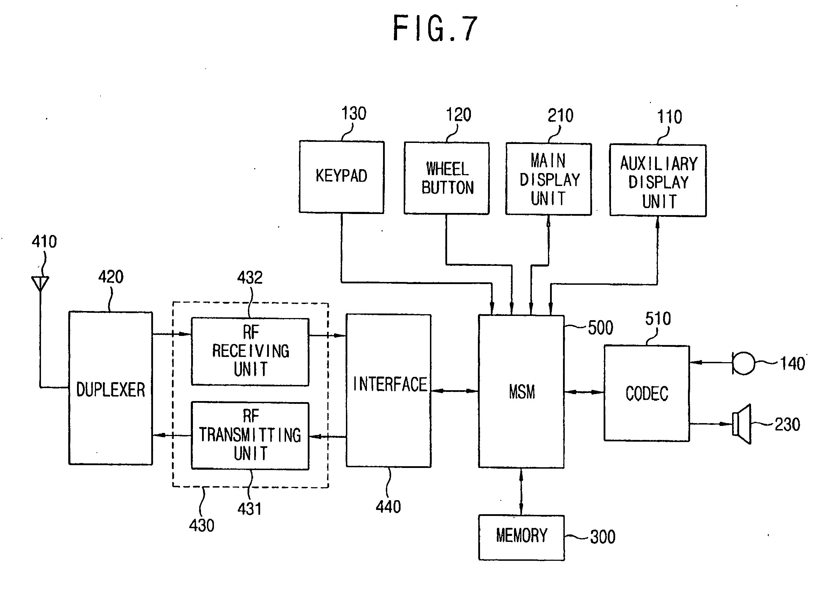

Figure 7 is a detailed block diagram showing the construction of the folder type mobile communication terminal in accordance with the present invention.

As shown in Figure 7, the folder type mobile communication terminal of the present invention includes: a mobile station modem (MSM) for controlling a mobile communication terminal for enabling a general phone call and an Internet communication; a duplexer 420 for separating a signal transmitting and received to and from a base station through an antenna 410; a transmitting and receiving unit 430 for transmitting and receiving a signal received through the antenna 410 and an internal signal of the mobile communication terminal as a radio frequency; a keypad 130 for transmitting a key value inputted from a user to the mobile station modem 500; a main display unit 210 for displaying the state and information of the mobile phone for the user according to a control signal of the mobile station modem 500; an auxiliary display unit 110 installed at an inner surface of the main body to easily utilize the main display unit 210 and allowing the user to view the state in which the folder is both in an opened and closed state; and a CODEC 510 for coding a voice signal inputted through a microphone 140, decoding an output signal of the mobile station modem 500 and outputting it to the speaker 230.

A wheel button 120 is additionally installed to be manipulated by the user to easily utilize the auxiliary display unit 110.

The transmitting and receiving unit 430 includes an RF transmitting unit 431 for modulating a signal outputted from the mobile station modem 500 into an RF signal through an interface 440 and transmitting it to outside through the duplexer 420 and the antenna 410; and an RF receiving unit 432 for demodulating the RF signal received through the antenna 410 and the duplexer 420, and outputting it to the mobile station modem 500 through the interface 440.

Even when the folder is opened and a text message and other operation is being performed, the auxiliary display unit 110 can check time, and displays history information for an Internet page opened in using the wireless Internet so that the user can directly move to a desired Internet page.

In case that the auxiliary display unit 110 is used as a conversation window in a chatting and the same conversation content is inputted, a corresponding sentence is selected and designated among displayed conversation sentences, so that a conversation input can be performed.

At this time, by using the wheel button 120, the wheel can be rotated to scroll a character or an Internet page without depressing the keypad 130 several times.

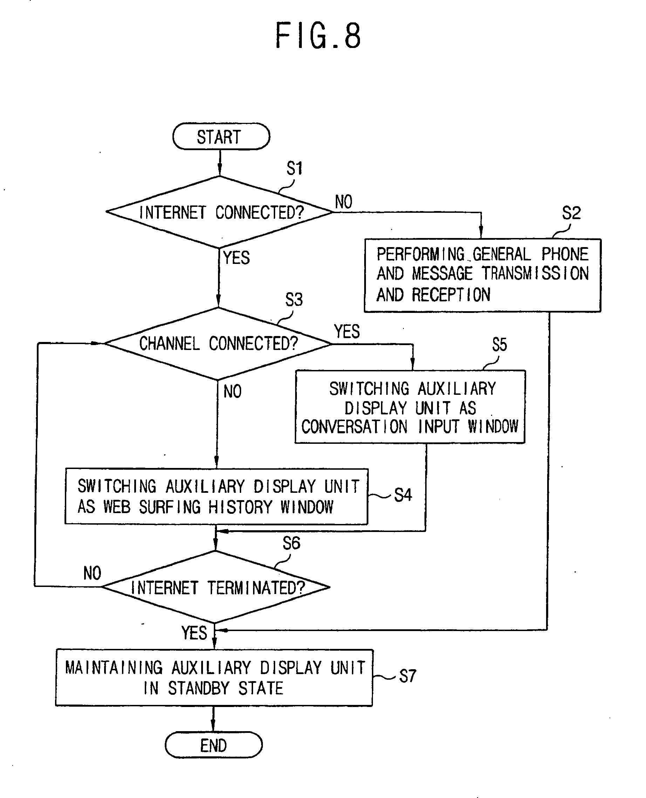

The operation method of the folder type mobile communication terminal constructed as described above will now be explained with reference to Figure 8.

As shown in Figure 8, when the folder of the folder type mobile communication terminal is opened and in an input standby state, it is determined whether a user is connected to the wireless Internet (step S1).

If the user is not connected to the wireless Internet, the mobile communication terminal performs a general phone function or a message transmission function according to an instruction inputted from the user (step S2).

If, however, it is determined that the user is connected to the wireless Internet, it is checked whether the user is to perform a chatting by using the mobile communication terminal (step S3).

If the user selects not to chat, the auxiliary display unit 110 is switched to an Internet searching history window to allow the Internet searching (step S4).

If, however, the user selects chatting, the auxiliary display unit 110 is switched to a conversation input window (step S5).

When the user terminates chatting or the Internet searching, it is checked whether the connection to the wireless Internet connected through the folder type mobile communication terminal is to be terminated (step S6).

If the user selects not to terminate the wireless Internet, it returns to the step of checking whether an Internet searching is to be performed.

If, however, the user selects to terminate the connection to the wireless Internet, the auxiliary display unit is switched to a standby state for displaying a message receiving state, a manner display mode, a remaining battery capacity display, a current time display and operated (step S7).

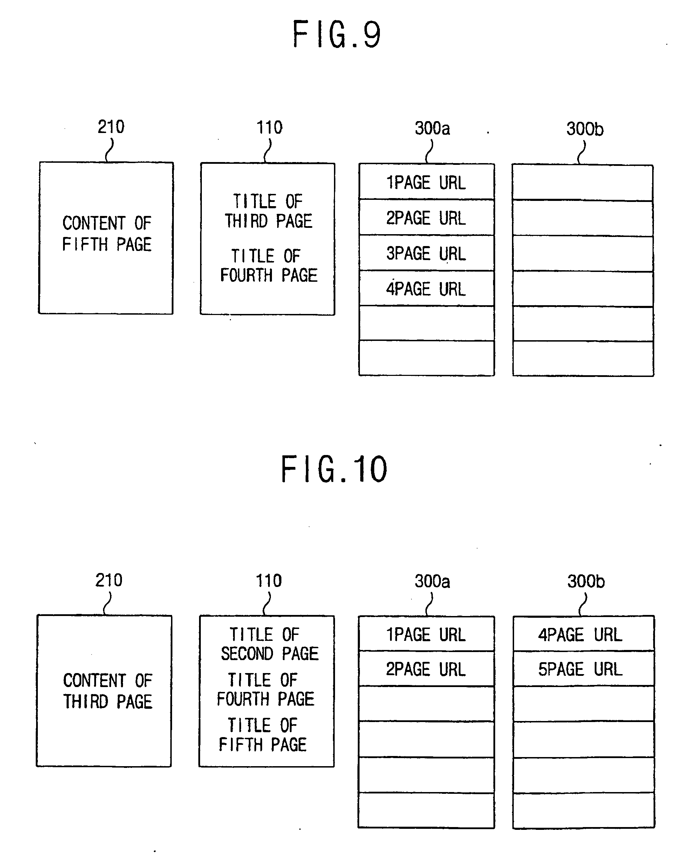

Figures 9, 10 and 11 are drawings illustrating an Internet searching method of the folder type mobile communication terminal in which the auxiliary display unit 110 is used as a history window in searching the Internet.

As shown in Figures 9, 10 and 11, the folder type mobile communication terminal includes a main display unit 210 for displaying a current Internet page for a user; an auxiliary display unit 110 for displaying titles of pages searched by a user; a first history database 300a and a second history database 300b for storing an Internet address corresponding to the title displayed on the auxiliary display unit 110.

The first history database 300a and the second history database 300b are included in a memory 300.

Addresses of each Internet page accessed by the user through the wireless Internet are sequentially stored in the first history database 300a, and lower addresses of the Internet pages accessed in occurrence of a back command for the Internet page are stored in the second history database 300b.

Figure 9 is a drawing illustrating that the auxiliary display unit is used a history window in searching the Internet.

The Internet searching method will now be described with reference to Figure 7.

When the user sequentially searches first, second, third, fourth and fifth Internet pages through a keypad manipulation, a content corresponding to the fifth Internet page is displayed on the current main display unit 210, while the titles of first, second, third and fourth Internet pages are sequentially displayed on the auxiliary display unit 110.

At this time, the mobile station modem 500 sequentially stores the addresses of first, second, third and fourth Internet pages in the first history database 300a and does not store an address of the Internet page in the second history database 300b.

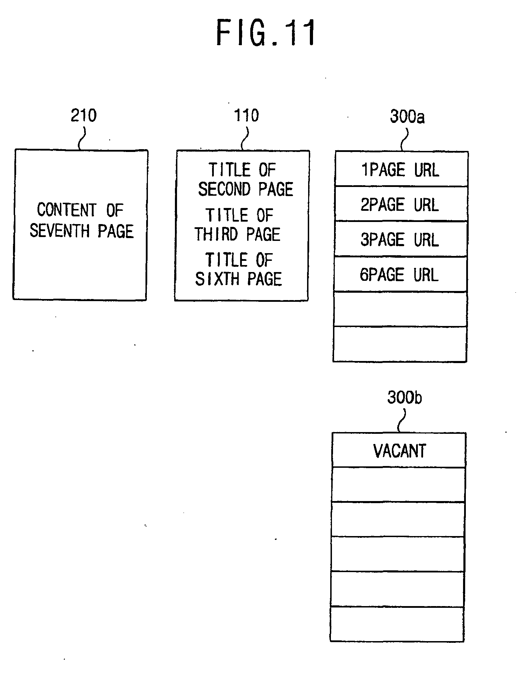

Figures 10 and 11 are drawings illustrating a method of using the auxiliary display unit of the folder type mobile communication terminal.

Figure 10 shows an embodiment in which a user selects an address of a third auxiliary display unit.

When the user selects an address of third Internet page among the history list displayed on the auxiliary display unit 110 by manipulating the wheel button 120, the mobile station modem 500 which has received the output signal of the wheel button 120 displays the third Internet page on the main display unit 210 and sequentially displays the titles of first, second, fourth and fifth Internet pages on the auxiliary display unit 110.

In addition, the mobile station modem 500 sequentially stores the addresses of first and second Internet pages in the first history database 300a of the memory 300, and sequentially stores the addresses of fourth and fifth Internet pages in the second history database 300b of the memory 300.

Figure 11 shows an embodiment in which the user searches a new Internet page through the keypad.

When the user sequentially searches new sixth and seventh Internet pages by manipulating the keypad 120, the seventh Internet page is displayed on the main display unit 210 and titles of first, second, third and sixth Internet pages are displayed on the auxiliary display unit 110.

That is, in case that the user is connected to the new Internet page, the content of the second history database 300b is deleted and the content of the connected Internet page is stored in the first history database 300a.

Accordingly, in case that the user's connection is changed from the third Internet page to the sixth and seventh Internet pages, the addresses of first, second, third and sixth Internet pages are stored in the first history database 300a while the addresses of fourth and fifth Internet pages stored in the second history database 300b are deleted.

When the user is again connected to the third Internet page, the address of the sixth Internet page is stored in the second history database 300b, and addresses of the first and second Internet pages remain in the first history database 300a.

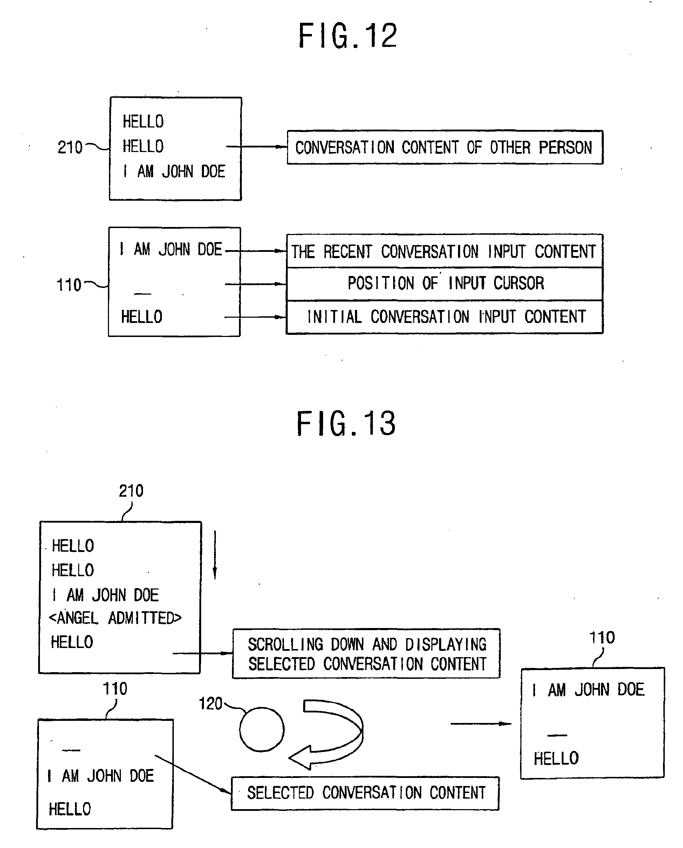

Figures 12, 13 and 14 are drawings illustrating a chatting method using the folder type mobile communication terminal in accordance with the present invention.

Figure 12 illustrates an embodiment that the auxiliary display unit of the present invention is used as a conversation input window in the Internet chatting.

As shown in Figure 12, the folder type mobile communication terminal includes a main display unit 210 for displaying a conversation content in the Internet chatting; and an auxiliary display unit 110 for displaying a conversation which has been inputted in the main display unit 210.

At the upper end of the auxiliary display unit 110, the most recently inputted conversation content is displayed.

That is, in the auxiliary display unit 110, the recent conversation input content is displayed at the upper end of an input cursor, and an initial conversation content is displayed at a lower end of the input cursor.

At this time, the user selects the conversation content displayed on the auxiliary display unit 110 and inputs it to the main display unit 210.

The conversation input content as much as the allocated memory size is stored in the memory 300 in the Internet chatting.

Figure 13 illustrates an embodiment in which the auxiliary display unit is utilized by using the wheel button.

When the user manipulates the cursor of the auxiliary display unit 110 by scrolling the wheel button 120 up and down, the conversation contents which have been inputted in the main display unit 210 through the keypad and stored in the memory are displayed in an input order.

At this time, the recently inputted conversation content is displayed at the upper end of the auxiliary display unit, and the initial inputted conversation content is displayed at the lower end of the auxiliary display unit.

That is, when the user upwardly scrolls the wheel button, the cursor is positioned at the recent conversation convent, while when the user downwardly scrolls the wheel button, the cursor is positioned at initially inputted conversation content.

The conversation content where the cursor is positioned is inputted to the main display unit 210 according to selection of the user.

For example, after the user inputs a conversation 'Hello' and 'I am John Doe' through the keypad, when a new person participates in the chatting, the user selects the conversation 'hello' displayed on the auxiliary display unit 110 by using the wheel button to thereby input it in the main display unit 210.

Namely, instead of inputting a conversation 'Hello' by manipulating the keypad, the user can designates the conversation 'Hello' displayed on the auxiliary display unit 110 from the inputted conversation contents and inputs it on the main display unit 210.

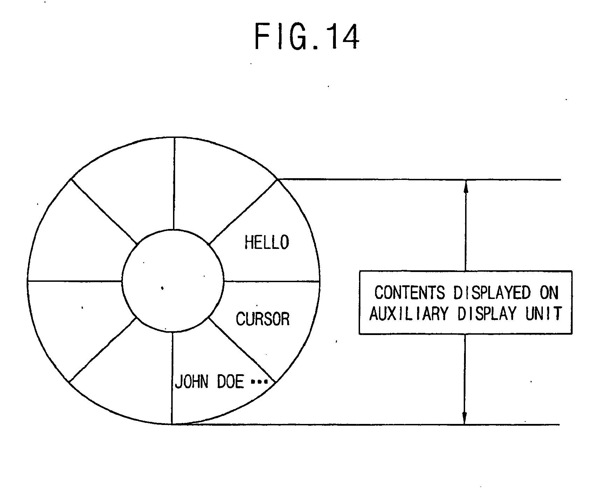

Figure 14 illustrates the wheel button in detail.

Whenever the wheel button is scrolled once, the cursor is moved up and down one by one. Accordingly, by scrolling the wheel button, the contents displayed on the auxiliary display unit 110 and the cursor are scrolled up and down according to the scroll of the wheel button.

As so far described, the folder type mobile communication terminal of the present invention has many advantages.

That is, for example, first, the folder type mobile communication terminal is constructed such that the user can view no matter whether the auxiliary display unit is in an opened state or in a closed state. Thus, the utilization of the auxiliary display unit can be heightened.

Secondly, since the utilization of the auxiliary display unit is improved by installing the wheel button, in case that a user chats by using the wireless Internet, the previously inputted conversation content can be inputted again by manipulating the wheel button. And, in searching information by using the wireless Internet, the previously searched Internet page can be easily searched only by manipulating the wheel button, so that the wireless Internet can be easily used.

Finally, since the auxiliary display unit is attached to the main body, the thickness of the folder can be reduced, so that the mobile communication terminal can be compact.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

It follows a list of embodiments:
1. A folder type mobile communication terminal comprising:
   a main body having a display unit; and
   a folder rotatably combined at the main body and having an opening unit allowing the display unit to be shown.
2. The mobile communication terminal of embodiment 1, further comprising:
   a wheel button for inputting a command of a user for an operation of the display unit.
3. The mobile communication terminal of embodiment 1, wherein the opening unit includes a transparent window to protect the display unit.
4. The mobile communication terminal of embodiment 1, wherein the display unit is formed at a left upper end of an inner surface of the main body.
5. The mobile communication terminal of embodiment 1, wherein the display unit is formed at a right upper end of the inner surface of the main body.
6. The mobile communication terminal of embodiment 1, wherein the display unit is formed at a middle upper end of the inner surface of the main body.
7. A folder type mobile communication terminal comprises:
   a main body having an auxiliary display unit; and
   a folder having a main display unit and an opening unit allowing the auxiliary display unit to be shown.
8. The mobile communication terminal of embodiment 7, wherein the folder type mobile communication terminal includes a wheel button for inputting an operation command of the auxiliary display unit.
9. The mobile communication terminal of embodiment 7, wherein the opening unit includes a transparent window to protect the auxiliary display unit.
10. The mobile communication terminal of embodiment 7, wherein the auxiliary display unit is formed at a left upper end of an inner surface of the main body.
11. The mobile communication terminal of embodiment 7, wherein the display unit is formed at a right upper end of the inner surface of the main body.
12. The mobile communication terminal of embodiment 7, wherein the display unit is formed at a middle upper end of the inner surface of the main body.
13. The mobile communication terminal of embodiment 7, wherein the auxiliary display unit displays a message receiving state, a manner mode, a remaining battery capacity, current time in a destination standby state.
14. The mobile communication terminal of embodiment 7, wherein the auxiliary display unit is switched to a history window for an Internet searching in case of using a wireless Internet, and switched to a conversation input window in case of chatting.
15. A folder type mobile communication terminal comprising:
   a main body having an auxiliary display unit;
   a folder having a main display unit and an opening unit formed at a position facing the auxiliary display unit; and
   a wheel button formed at one side of the main body to input an operation command to the auxiliary display unit.
16. The mobile communication terminal of embodiment 15, wherein the auxiliary display unit is formed at a portion where the folder and the main body are hinge-connected.
17. An operating method of a folder type mobile communication terminal comprising the steps of:
   connecting to the Internet through a folder type mobile communication terminal;
   displaying titles for Internet pages opened for searching the Internet; and
   displaying a conversation content inputted in chatting.
18. The method of embodiment 17, further comprising: performing a general phone function or a message transmission and reception function if a user is not connected to the Internet.
19. The method of embodiment 17, wherein the Internet searching step comprises:
   sequentially displaying titles of Internet pages searched by the user on the auxiliary display unit;
   selecting a title of an Internet page to be searched among the displayed titles; and
   displaying a content of the selected Internet page on the main display unit.
20. The method of embodiment 19, further comprises:
   sequentially storing addresses of each searched Internet page in a first history database; and
   storing lower addresses of the Internet page accessed according to a back command in a second history database.
21. The method of embodiment 20, wherein if the user moved into a new Internet page that does not exist in the history list, the addresses stored in the second history database are all deleted.
22. The method of embodiment 17, wherein the chatting function step comprises:
   displaying an inputted conversation content on the auxiliary display unit;
   selecting a display conversation content; and
   displaying the selected conversation content on the main display unit.
23. The method of embodiment 22, wherein the most recently inputted conversation content is displayed at the upper end of the auxiliary display unit.

## Claims

1. A folder type mobile communication terminal having a main display unit (210) formed at an inner surface of a folder (200), an auxiliary display unit (110) formed at an inner surface of a main body (100), wherein the auxiliary display unit (110) is visible no matter whether the folder (200) is opened or closed, and a wheel button (210) for scrolling up and down an input cursor displayed on the auxiliary display unit (110) according to the command of a user,
wherein the folder type mobile communication terminal is adapted:
to be connected to the Internet through the folder type mobile communication terminal (S1);
to activate a chatting function (S3); and
to display, on the main display unit (210), a first conversation content inputted through a key pad in chatting and a conversation content transmitted from other user in chatting;
to display, on the auxiliary display unit (110), the first conversation content which have been inputted in the main display unit (210) through the key pad;
to scroll up and down the input cursor displayed on the auxiliary display unit (110) according to the scroll of the wheel button (210);
to select conversation content from the first conversation content on the auxiliary display unit (110) where the cursor is positioned by using the wheel button (210); and
to input and display the selected conversation content to the main display unit (210) for retransmission.

2. The mobile communication terminal of claim 1, further comprising an opening (220) allowing the auxiliary display unit (110) to be shown.

3. The mobile communication terminal of claim 1, wherein the opening (220) includes a transparent window to protect the auxiliary display unit (110).

4. The mobile communication terminal of claim 1, wherein the auxiliary display unit (110) is formed at a left upper end or a right upper end or at a middle upper end of the inner surface of the main body.

5. The mobile communication terminal of claim 1, wherein the auxiliary display unit (110) is adapted to display a message receiving state, a manner mode, a remaining battery capacity or a current time in a destination standby state.

6. The mobile communication terminal of claim 5, wherein the auxiliary display unit (110) is adapted to be switched to a history window for an Internet searching in case of using a wireless Internet, and switched to a conversation input window in case of chatting.

7. The mobile communication terminal of claim 1, wherein the auxiliary display unit (110) is formed at a position facing the opening unit (220).

8. The mobile communication terminal of claim 1, wherein the auxiliary display unit (110) is formed at a portion where the folder (200) and the main body (100) are hinge-connected.

9. An operating method of a folder type mobile communication terminal having a main display unit (210) formed at an inner surface of a folder (200), an auxiliary display unit (110) formed at an inner surface of a main body (100), wherein the auxiliary display unit (110) is visible no matter whether the folder (200) is opened or closed, and a wheel button (210) for scrolling up and down an input cursor displayed on the auxiliary display unit (110) according to the command of a user, comprising the steps of:
connecting to the Internet through the folder type mobile communication terminal (S1);
activating chatting function (S3);
displaying, on the main display unit (210), a first conversation content inputted through a key pad in chatting and a conversation content transmitted from other user in chatting;
displaying, on the auxiliary display unit (110), the first conversation content which have been inputted in the main display unit (210) through the key pad;
scrolling up and down the input cursor displayed on the auxiliary display unit (110) to select the conversation content according to the scroll of the wheel button (210);
selecting conversation content from the first conversation content on the auxiliary display unit (110) where the cursor is positioned by using the wheel button (210); and
inputting and displaying the selected conversation content on the main display for retransmission.

10. The method of claim 9, wherein the most recently inputted conversation content is displayed at the upper end of the auxiliary display unit (110).

11. The mobile communication terminal of claim 1, wherein the auxiliary display unit (110) displays the recent conversation input content at the upper end of an input cursor and an old conversation content at lower end of the input cursor.

12. The method of claim 9, wherein the auxiliary display unit (110) displays the recent conversation input content at the upper end of an input cursor and an old conversation content at lower end of the input cursor.

## Patentansprüche

1. Mobilkommunikationsendgerät des Klapptyps, das eine Hauptanzeigeeinheit (210), die an einer Innenfläche einer Klappe (200) gebildet ist, eine zusätzlichen Anzeigeeinheit (110), die an einer Innenfläche eines Hauptkörpers (100) gebildet ist, wobei die zusätzliche Anzeigeeinheit (110) unabhängig davon, ob die Klappe (200) geöffnet oder geschlossen ist, sichtbar ist, und einen Drehknopf (210), um einen Eingabe-Cursor, der auf der zusätzlichen Anzeigeeinheit (110) angezeigt wird, gemäß einem Befehl eines Anwenders aufwärts und abwärts zu rollen, aufweist,
wobei das Mobilkommunikationsendgerät des Klapptyps ausgelegt ist:
durch das Mobilkommunikationsendgerät des Klapptyps mit dem Internet verbunden zu werden (S 1);
eine Chat-Funktion zu aktivieren (S3); und
auf der Hauptanzeigeeinheit (210) einen ersten Nachrichtenübertragungsinhalt, der während des Chattens durch ein Tastenfeld eingegeben wird, und einen Nachrichtenübertragungsinhalt, der während des Chattens von einem anderen Anwender gesendet wird, anzuzeigen;
auf der zusätzlichen Anzeigeeinheit (110) den ersten Nachrichtenübertragungsinhalt, der in der Hauptanzeigeeinheit (210) durch das Tastenfeld eingegeben worden ist, anzuzeigen;
den Eingabe-Cursor, der auf der zusätzlichen Anzeigeeinheit (110) angezeigt wird, gemäß dem Rollen des Drehknopfs (210) aufwärts und abwärts zu rollen;
Nachrichtenübertragungsinhalt aus dem ersten Nachrichtenübertragungsinhalt auf der zusätzlichen Anzeigeeinheit (110) auszuwählen, wo der Cursor durch Verwenden des Drehknopfs (210) positioniert wird; und
den ausgewählten Nachrichtenübertragungsinhalt an der Hauptanzeigeeinheit (210) zum erneuten Senden einzugeben und anzuzeigen.

2. Mobilkommunikationsendgerät nach Anspruch 1, das ferner umfasst:
eine Öffnung (220), die ermöglicht, dass die zusätzlichen Anzeigeeinheit (110) gezeigt wird.

3. Mobilkommunikationsendgerät nach Anspruch 1, wobei die Öffnung (220) ein transparentes Fenster enthält, um die zusätzliche Anzeigeeinheit (110) zu schützen.

4. Mobilkommunikationsendgerät nach Anspruch 1, wobei die zusätzliche Anzeigeeinheit (110) an einem linken oberen Ende oder einem rechten oberen Ende oder in einem mittleren oberen Ende der Innenfläche des Hauptkörpers gebildet ist.

5. Mobilkommunikationsendgerät nach Anspruch 1, wobei die zusätzliche Anzeigeeinheit (110) ausgelegt ist, einen Nachrichtenempfangszustand, einen Verhaltensmodus, eine verbleibende Batteriekapazität oder eine aktuelle Zeit in einem Ziel-Ruhezustand anzuzeigen.

6. Mobilkommunikationsendgerät nach Anspruch 5, wobei die zusätzliche Anzeigeeinheit (110) ausgelegt ist, für eine Internetsuche im Falle des Verwendens eines drahtlosen Internets auf ein Verlaufsfenster geschaltet zu werden, und im Falle des Chattens auf ein Nachrichtenübertragungseingabefenster geschaltet zu werden.

7. Mobilkommunikationsendgerät nach Anspruch 1, wobei die zusätzliche Anzeigeeinheit (110) an einer Position gebildet ist, die der Öffnungseinheit (220) gegenüber liegt.

8. Mobilkommunikationsendgerät nach Anspruch 1, wobei die zusätzliche Anzeigeeinheit (110) an einem Abschnitt gebildet ist, wo die Klappe (200) und der Hauptkörper (100) drehbar verbunden sind.

9. Verfahren zum Betreiben eines Mobilkommunikationsendgeräts des Klapptyps, das eine Hauptanzeigeeinheit (210), die an einer Innenfläche einer Klappe (200) gebildet ist, eine zusätzlichen Anzeigeeinheit (110), die an einer Innenfläche eines Hauptkörpers (100) gebildet ist, wobei die zusätzliche Anzeigeeinheit (110) unabhängig davon, ob die Klappe (200) geöffnet oder geschlossen ist, sichtbar ist, und einen Drehknopf (210), um einen Eingabe-Cursor, der auf der zusätzlichen Anzeigeeinheit (110) angezeigt wird, gemäß einem Befehl eines Anwenders aufwärts und abwärts zu rollen, aufweist, wobei das Verfahren die folgenden Schritte umfasst:
Verbinden mit dem Internet durch das Mobilkommunikationsendgerät des Klapptyps (S1);
Aktivieren einer Chat-Funktion (S3);
Anzeigen eines ersten Nachrichtenübertragungsinhalts, der während des Chattens durch ein Tastenfeld eingegeben wird, und eines Nachrichtenübertragungsinhalts, der während des Chattens von einem anderen Anwender gesendet wird, auf der Hauptanzeigeeinheit (210);
Anzeigen des ersten Nachrichtenübertragungsinhalts, der in der Hauptanzeigeeinheit (210) durch das Tastenfeld eingegeben worden ist, auf der zusätzlichen Anzeigeeinheit (110)
aufwärts und abwärts Rollen des Eingabe-Cursors, der auf der zusätzlichen Anzeigeeinheit (110) angezeigt wird, gemäß dem Rollen des Drehknopfs (210), um den Nachrichtenübertragungsinhalt auszuwählen;
Auswählen von Nachrichtenübertragungsinhalt aus dem ersten Nachrichtenübertragungsinhalt auf der zusätzlichen Anzeigeeinheit (110), wo der Cursor durch Verwenden des Drehknopfs (210) positioniert ist; und
Eingeben und Anzeigen des auswählten Nachrichtenübertragungsinhalts auf der Hauptanzeigeeinheit zum erneuten Senden.

10. Verfahren nach Anspruch 9, wobei der zuletzt eingegebene Nachrichtenübertragungsinhalt am oberen Ende der zusätzlichen Anzeigeeinheit (110) angezeigt wird.

11. Mobilkommunikationsendgerät nach Anspruch 1, wobei die zusätzliche Anzeigeeinheit (110) den letzten Nachrichtenübertragungsinhalt am oberen Ende eines Eingabe-Cursors und einen alten Nachrichtenübertragungsinhalt am unteren Ende des Eingabe-Cursors anzeigt.

12. Verfahren nach Anspruch 9, wobei die zusätzliche Anzeigeeinheit (110) den letzten Nachrichtenübertragungsinhalt am oberen Ende eines Eingabe-Cursors und einen alten Nachrichtenübertragungsinhalt am unteren Ende des Eingabe-Cursors anzeigt.

## Revendications

1. Terminal de communication mobile de type à clapet comportant une unité d'affichage principale (210) constituée à une surface intérieure d'un clapet (200), une unité d'affichage auxiliaire (110) constituée à une surface intérieure d'un corps principal (100), dans lequel l'unité d'affichage auxiliaire (110) est visible que le clapet (200) soit ouvert ou fermé, et une molette (210) pour faire défiler vers le haut et vers le bas un curseur d'entrée affiché sur l'unité d'affichage auxiliaire (110) en fonction de la commande d'un utilisateur,
dans lequel le terminal de communication mobile de type à clapet est apte à :
être connecté à l'Internet par l'intermédiaire du terminal de communication mobile de type à clapet (S1) ;
activer une fonction de conversation (S3) ; et
afficher, sur l'unité d'affichage principale (210), un premier contenu de conversation entré par l'intermédiaire d'un clavier au cours d'une conversation, et un contenu de conversation transmis à partir d'un autre utilisateur au cours d'une conversation ;
afficher, sur l'unité d'affichage auxiliaire (110), le premier contenu de conversation qui a été entré dans l'unité d'affichage principale (210) par l'intermédiaire du clavier ;
faire défiler vers le haut et vers le bas le curseur d'entrée affiché sur l'unité d'affichage auxiliaire (110) en fonction du défilement de la molette (210) ;
sélectionner un contenu de conversation à partir du premier contenu de conversation sur l'unité d'affichage auxiliaire (110) où le curseur est positionné en utilisant la molette (210) ; et
entrer et afficher le contenu de conversation sélectionné sur l'unité d'affichage principale (210) pour une retransmission.

2. Terminal de communication mobile selon la revendication 1, comprenant en outre :
une ouverture (220) permettant d'exposer l'unité d'affichage auxiliaire (110).

3. Terminal de communication mobile selon la revendication 1, dans lequel l'ouverture (220) comprend une fenêtre transparente pour protéger l'unité d'affichage auxiliaire (110).

4. Terminal de communication mobile selon la revendication 1, dans lequel l'unité d'affichage auxiliaire (110) est constituée à une extrémité supérieure gauche ou à une extrémité supérieure droite ou à une extrémité supérieure de milieu de la surface intérieure du corps principal.

5. Terminal de communication mobile selon la revendication 1, dans lequel l'unité d'affichage auxiliaire (110) est apte à afficher un état de réception de message, un mode de manière, une capacité de batterie restante ou une heure actuelle dans un état en veille de destination.

6. Terminal de communication mobile selon la revendication 5, l'unité d'affichage auxiliaire (110) est apte à être commutée dans une fenêtre d'historique pour une recherche sur Internet en cas d'utilisation d'un Internet sans fil, et commutée dans une fenêtre d'entrée de conversation en cas de conversation.

7. Terminal de communication mobile selon la revendication 1, dans lequel l'unité d'affichage auxiliaire (110) est constituée à une position face à l'unité d'ouverture (220).

8. Terminal de communication mobile selon la revendication 1, dans lequel l'unité d'affichage auxiliaire (110) est constituée à une portion où le clapet (200) et le corps principal (100) sont reliés en charnière.

9. Procédé de fonctionnement d'un terminal de communication mobile de type à clapet comportant une unité d'affichage principale (210) constituée à une surface intérieure d'un clapet (200), une unité d'affichage auxiliaire (110) constituée à une surface intérieure d'un corps principal (100), dans lequel l'unité d'affichage auxiliaire (110) est visible que le clapet (200) soit ouvert ou fermé, et une molette (210) pour faire défiler vers le haut et vers le bas un curseur d'entrée affiché sur l'unité d'affichage auxiliaire (110) en fonction de la commande d'un utilisateur, comprenant les étapes consistant à :
se connecter à l'Internet par l'intermédiaire du terminal de communication mobile de type à clapet (S1) ;
activer une fonction de conversation (S3) ;
afficher, sur l'unité d'affichage principale (210), un premier contenu de conversation entré par l'intermédiaire d'un clavier au cours d'une conversation, et un contenu de conversation transmis à partir d'un autre utilisateur au cours d'une conversation ;
afficher, sur l'unité d'affichage auxiliaire (110), le premier contenu de conversation qui a été entré dans l'unité d'affichage principale (210) par l'intermédiaire du clavier ;
faire défiler vers le haut et vers le bas le curseur d'entrée affiché sur l'unité d'affichage auxiliaire (110) pour sélectionner le contenu de conversation en fonction du défilement de la molette (210) ;
sélectionner un contenu de conversation à partir du premier contenu de conversation sur l'unité d'affichage auxiliaire (110) où le curseur est positionné en utilisant la molette (210) ; et
entrer et afficher le contenu de conversation sélectionné sur l'unité d'affichage principale pour une retransmission.

10. Procédé selon la revendication 9, dans lequel le contenu de conversation entré le plus récemment est affiché à l'extrémité supérieure de l'unité d'affichage auxiliaire (110).

11. Terminal de communication mobile selon la revendication 1, dans lequel l'unité d'affichage auxiliaire (110) affiche le contenu d'entrée de conversation récent à l'extrémité supérieure d'un curseur d'entrée et un contenu de conversation ancien à l'extrémité inférieure du curseur d'entrée.

12. Procédé selon la revendication 9, dans lequel l'unité d'affichage auxiliaire (110) affiche le contenu d'entrée de conversation récent à l'extrémité supérieure d'un curseur d'entrée et un contenu de conversation ancien à l'extrémité inférieure du curseur d'entrée.
